# DEMANDE DE BREVET EUROPEEN

(11) **EP 0 713 025 A1**
(43) Date de publication de la demande: **22.05.1996**
(21) Numéro de dépôt: 95870122.9
(22) Date de dépôt: 16.11.1995
(51) Int. Cl.: F16D 25/08

(54) **Dispositif de commande d'embrayage**

(30) Priorité: 17.11.1994 BE 9401037
(71) Demandeur: MEISTER BENELUX S.A., B-4032 CHênée-Liège (BE)
(72) Inventeur: Cimarosti, Luigi, B-4170 Comblain-au-Pont (BE)
(74) Mandataire: Overath, Philippe

(57) **Abrégé**

Le dispositif comprend une pièce intérieure (10) et une pièce extérieure (20) de forme substantiellement cylindrique présentant respectivement une surface externe (12) et une surface interne (22) étagées sur au moins deux sections de diamètre différent en créant deux épaulements (14, 24) entre lesquels est formée une chambre d'expansion (34) reliée à une ouverture d'alimentation (36) de fluide sous pression prévue dans la pièce extérieure (20) et à proximité de la chambre d'expansion (34). Le côté avant de cette pièce extérieure (20) comporte également une butée d'embrayage (50) sous forme d'une bague de poussée (52) montée sur un chemin de roulement à billes (54) intégré dans la pièce extérieure (20).

Le dispositif de commande peut être utilisé pour tout type d'embrayage et en particulier pour embrayages de véhicules automobiles.

## Description

La présente invention se rapporte à un dispositif de commande pour embrayage destiné aux engins tels que des véhicules avec boîte de vitesses manuelle et plus particulièrement à un dispositif de commande fluidique pour embrayage.

La plupart des systèmes actuels de commandes d'embrayage exercent une force de débrayage sur l'extrémité d'une fourchette à l'extérieure du carter de la boîte de vitesses. Cette force est fournie normalement soit par un câble de traction soit par un cylindre hydraulique récepteur non-concentrique à l'arbre mené de la boîte de vitesses. Le mouvement angulaire de la fourchette permet, par un effet de levier, l'actionnement d'un roulement guidé sur un tube porteur concentrique à l'arbre mené. Ce roulement sert de butée d'embrayage et exerce la force de débrayage sur le ressort à diaphragme du mécanisme d'embrayage. Toutes les commandes d'embrayage conventionnelles utilisant une fourchette pour la transmission de la force de débrayage, ne sont pas satisfaisantes au point de vue qualité et précision.

Des dispositifs de commande fluidique pour embrayage tels que décrit par exemple dans le document EP-A-0381716 permettaient déjà de remédier aux inconvénients précités. Un tel dispositif comprend essentiellement deux pièces concentriques : une pièce intérieure et une pièce extérieure. Le document montre une réalisation dans laquelle la pièce intérieure est maintenue par des "O-rings" contre le carter d'embrayage sur le tube porteur qui entoure l'arbre mené. La pièce intérieure possède à l'extérieur une surface cylindrique étagée présentant deux sections de diamètres différents. La pièce extérieure possède une surface cylindrique étagée de son côté interne présentant deux sections de diamètres substantiellement égaux à ceux de la surface externe de la pièce intérieure de façon qu'elle puisse coopérer avec la pièce intérieure par glissement des surfaces l'une sur l'autre. Entre les deux pièces, une chambre d'expansion est formée dans laquelle peut être introduit un fluide sous pression. Une conduite pour fluide est prévue dans la pièce intérieure permettant de faire rentrer le fluide dans la pièce par le côté libre près du carter pour aboutir dans la chambre d'expansion. Avec l'aide de joints d'étanchéité la chambre d'expansion est rendue étanche et peut ainsi effectuer une force axiale suffisante pour écarter la pièce extérieure de la pièce intérieure lors de l'introduction d'un fluide sous pression. Du côté des ressorts à diaphragme la pièce extérieure est munie d'un anneau de butée monté sur un roulement à billes incorporé dans la pièce, servant à repousser le ressort à diaphragme lors de l'activation de la commande. L'utilisation d'un dispositif d'embrayage tel que décrit dans cette demande de brevet, permet de faire une économie des nombreuses pièces nécessaires pour activer un embrayage classique (fourchette d'embrayage, supports de fourchette, ...), ce qui simplifie considérablement la fabrication, le montage, le réglage, ... d'une commande d'embrayage et contribue déjà à un gain de place.

Les dimensions des nouvelles générations de boîtes de vitesses sont extrêmement réduites afin de permettre une traction des roues avant avec un moteur monté dans le sens transversal. Ainsi, la distance libre entre le palier de support de l'arbre mené à l'entrée de la boîte de vitesses et le mécanisme d'embrayage lié au volant moteur est réduite à son minimum. En plus, l'emplacement du palier de l'arbre secondaire pénètre souvent dans la cloche (carter) de l'embrayage de façon telle que les dimensions des pièces disposées concentriquement à l'arbre mené (arbre primaire) doivent être très limitées. Par conséquent, la conception des fourchettes de commande d'embrayage conventionnelles a également changé dans les nouvelles générations de boîte de vitesses. De ce fait, les pertes de qualité de transmission de la force de débrayage dues aux bras de levier plus courts sont devenues encore plus graves.

Le but de l'invention est de réaliser un dispositif de commande fluidique pour embrayage ayant des dimensions encore plus réduites tout en améliorant la transmission de la force de débrayage.

Un deuxième but est de réaliser un dispositif de commande pour embrayage de configuration simple de façon à faciliter la fabrication et le (dé)montage en réduisant la nécessité de réglages au minimum.

En vue de la réalisation de ces buts, le dispositif objet de l'invention est essentiellement caractérisé par le contenu de la revendication principale.

L'invention sera exposée plus en détail ci-après à l'aide de modes de réalisation et de figures dans lesquelles :
- la figure 1 est une vue partielle en coupe transversale d'un embrayage équipé du dispositif selon l'invention ;
- la figure 2 est une vue en coupe d'une variante de l'invention ; et
- la figure 3 représente une vue en coupe du dispositif maintenu sur un tube porteur.

L'invention concerne donc un dispositif de commande fluidique de forme substantiellement cylindrique pouvant exercer par son extrémité avant une force axiale sur les lamelles du ressort à diaphragme en s'appuyant de son autre extrémité contre le carter d'embrayage.

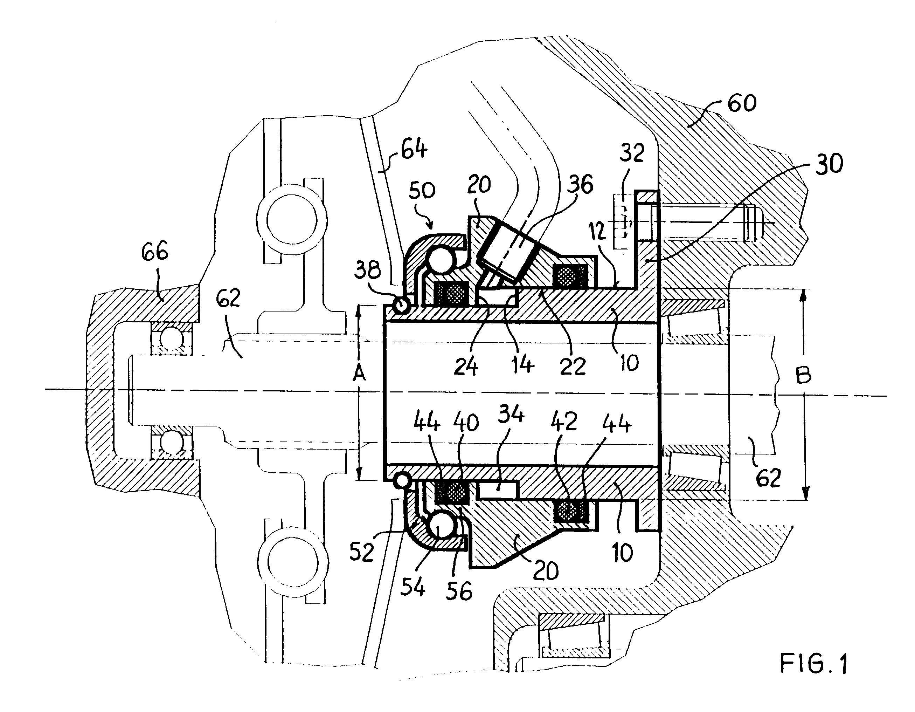

Selon la figure 1 le dispositif selon l'invention comprend une pièce intérieure 10 de forme substantiellement cylindrique ayant une surface externe 12 étagée ayant deux sections cylindriques de diamètres différents reliées, à proximité du centre longitudinal de la pièce intérieure 10, par un épaulement annulaire 14. On obtient ainsi une surface externe 12 présentant une section de diamètre A (petit diamètre) et une section de diamètre B (grand diamètre).

Dans la présente réalisation la pièce intérieure 10 comprend à l'extrémité de la section de diamètre B une bride 30 permettant de fixer l'ensemble au carter d'embrayage 60. au moyen de boulons 32.

Une pièce extérieure 20 également de forme substantiellement cylindrique est disposée concentriquement sur la pièce intérieure 10 de façon à ce qu'un déplacement axial reste possible. A cet effet, la pièce extérieure 20 possède une surface interne 22 étagée ayant deux sections de diamètres correspondants aux diamètres A et B de la pièce intérieure 10, les sections étant reliées à proximité du centre longitudinal de la pièce extérieure 20 par un épaulement annulaire 24. Le déplacement axial de la pièce extérieure 20 est limité dans le sens du carter 60 par son extrémité arrière qui vient buter contre la bride 30 ; à ce moment, l'épaulement 14 de la pièce intérieure 10 viendra à proximité de l'épaulement 24 de la pièce extérieure 20.

Une chambre d'expansion 34 est créée entre les deux épaulements 14, 24 formés par les surfaces étagées 12, 22. La chambre d'expansion 34 ainsi créée entre la pièce extérieure 20 et la pièce intérieure 10 doit être connectée par au moins une ouverture d'alimentation 36 avec l'extérieur. Afin de réduire la longueur de montage du dispositif, cette connexion est réalisée, selon l'invention, dans la pièce extérieure 20 et est reliée à une conduite telle qu'une conduite flexible avec du fluide sous pression (non représentée). Normalement, la chambre d'expansion 34 est également reliée à une canalisation de purge (non représentée). Cette deuxième ouverture de la chambre d'expansion 34 peut se trouver dans la pièce extérieure 20 sur n'importe quelle position périphérique par rapport à la première ouverture 36, c.a.d. directement à côté aussi bien qu'en position opposée. La connexion de purge doit uniquement permettre à des éventuelles bulles d'air de pouvoir sortir de la canalisation.

Un anneau d'arrêt 38 situé à l'extrémité avant de la pièce intérieure 10 (du côté de la section avec diamètre A) limite le déplacement axial de la pièce extérieure 20 dans le sens du ressort à diaphragme 64 de l'embrayage.

Sur son extrémité avant (côté avec section de diamètre A), la pièce extérieure 20 est équipée d'une butée d'embrayage 50 qui en repoussant les lamelles du ressort à diaphragme 64 va permettre le débrayage du volant moteur 66 et de l'arbre mené 62.

La réalisation illustrée sur les figures nous montre une butée d'embrayage 50 avec roulement intégré de configuration très simple. La butée d'embrayage comprend une bague de poussée 52 qui est montée sur la pièce mobile (ici la pièce extérieure 20) par l'intermédiaire d'un chemin de roulement à billes 54. L'extrémité avant 56 de la pièce extérieure 20 est conçue de façon à accommoder le chemin de roulement à billes 54 et ceci sans pièces additionnelles.

Afin de rendre étanche la chambre d'expansion 34, on prévoit des joints élastiques 40, 42 qui sont disposés dans deux gorges annulaires prévues dans la surface interne 22 de la pièce extérieure 20 et de part et d'autre de la chambre d'expansion 34.

Cette disposition particulière des joints d'étanchéité 40, 42 assure également un amortissement des éventuelles vibrations. Dans la réalisation représenté en figure 1 les joints élastiques 40, 42 sont disposés tous les deux dans la pièce extérieure 20 (pièce mobile). L'amortissement, ainsi obtenu, est d'une qualité constante sur toute la course du déplacement étant donné que la distance entre les deux joints 40, 42 ne change pas avec le déplacement axial de la pièce extérieure 20 sur la pièce intérieure 10. Par cette disposition, on obtient également un coussin d'huile (en cas d'utilisation d'huile hydraulique) entre les surfaces en contact lors de chaque déplacement axial de la pièce mobile (20).

Afin de garantir le contact permanent entre la bague de poussée 52 de la butée d'embrayage 50 et les lamelles du ressort à diaphragme 66 du mécanisme d'embrayage, le dispositif selon l'invention n'utilise pas de ressorts de pré-charge, normalement présent dans la plupart des systèmes traditionnels, mais parvient à obtenir le même résultat par les joints élastiques 40, 42 qui disposent d'une précompression radiale suffisante pour créer une force de maintien axiale suffisante.

Le joint d'étanchéité 40 du côté avant de la section de diamètre A de la pièce extérieure 20 est disposé de préférence en-dessous du chemin de roulement à billes 54 intégré à l'extrémité de la pièce extérieure 20 et ce pour gagner encore de la place et par conséquent de limiter la longueur du dispositif.

Avantageusement, une bague racleur en matière composite est logée dans la même gorge à côté de chaque joint 40, 42 pour empêcher l'introduction de corps étrangers venant de l'extérieur tels que des poussières ou toutes autres particules étrangères et qui pourraient entraver le bon fonctionnement du dispositif.

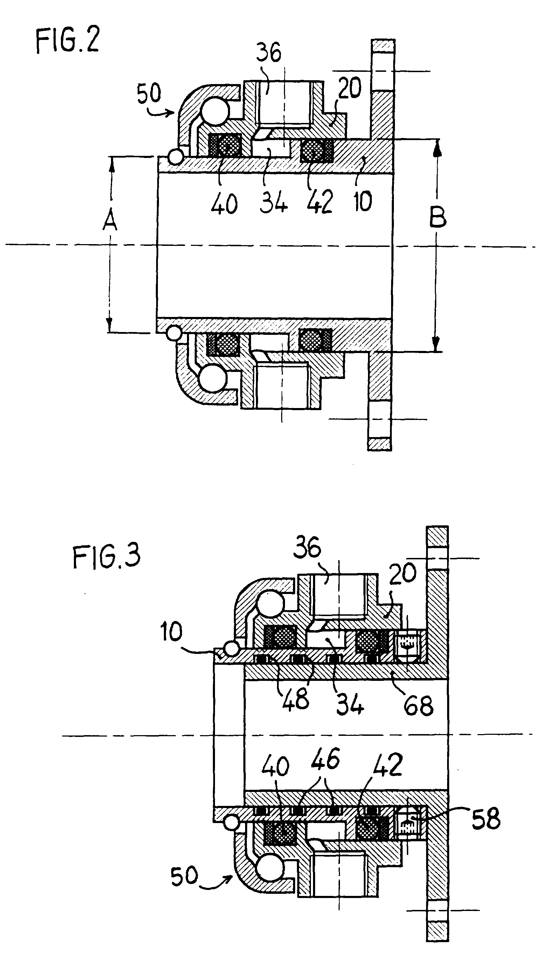

La figure 2 montre une variante de l'invention adaptée en fonction d'applications particulières du dispositif de commande d'embrayage. Dans cette variante de réalisation on a prévu de monter le joint d'étanchéité 42 du côté de la section de diamètre B dans la pièce intérieure 10. Ceci permet soit de raccourcir la longueur de la pièce extérieure 20 soit d'augmenter les possibilités d'emplacement du raccord de conduit de fluide sous pression 36.

Le dispositif de commande comme illustré à la figure 3 est maintenu en place par l'intermédiaire de "O-rings" 46 coinçant le dispositif sur un tube porteur 68 existant dans la plupart des embrayages classiques. A cet effet, on a prévu des gorges annulaires 48 dans l'alésage interne de la pièce intérieure 10. Aux lieus des joints type "O-rings" 46 ont peut également prévoir l'application d'un produit tel que du silicone dans les gorges annulaires 48 qui à leur tours peuvent être de forme annulaires ou hélicoïdales.

Dans certaines applications, il peut être nécessaire de prévoir également une possibilité de fixation de la pièce intérieure 10 au moyen de vis (58) du type vis noyée (connue sous le nom vis Allen).

La mise en oeuvre de l'objet de la présente invention procure les avantages essentiels suivants :
- réduction sensible des dimensions de l'ensemble du dispositif d'embrayage entre-autres par l'aménagement de la conduite d'amenée de fluide sous pression dans la pièce extérieure (mobile) et à proximité de la chambre d'expansion, par la disposition particulière des joints d'étanchéité et par l'incorporation du chemin de roulement à billes de la butée d'embrayage dans la pièce extérieure du dispositif ;
- simplification du dispositif (réduction du nombre de pièces) par la suppression, selon un mode de réalisation, du tube porteur ou tube de guidage qui est présent dans la plupart des boites de vitesses existantes et qui est remplacé dans la présente invention par la pièce intérieure du dispositif, faisant office à la fois de tube porteur et faisant partie intégrante du dispositif de commande hydraulique (piston et/ou cylindre du dispositif);
- suppression des ressorts de pré-charge, normalement utilisés pour maintenir la butée d'embrayage contre les lamelles du ressort à diaphragme; cette suppression est devenue possible par la disposition particulière et le dimensionnement adéquat des joints d'étanchéité;
- meilleur guidage de la pièce mobile (extérieure) du dispositif, également obtenu par la disposition particulière des joints et par le fait que la pièce mobile se déplace toujours sur un coussin d'huile, absorbant ainsi les vibrations et limitant l'usure des pièces.

Il est clair que l'invention ne se limite pas aux modes de réalisations décrits ci-dessus mais est également applicable aux dispositifs de commande similaires et ce dans d'autres types d'embrayages.

On peut, par exemple, s'imaginer que la pièce extérieure est fixée contre le carter d'embrayage et que c'est la pièce intérieure qui va effectuer le déplacement pour aller repousser ou tirer le ressort à diaphragme.

## Revendications

1. Dispositif de commande pour embrayage fluidique comprenant une pièce intérieure (10) substantiellement cylindrique présentant une surface externe (12) étagée présentant au moins deux sections de diamètre différents reliées par un épaulement (14) externe, une pièce extérieure (20) substantiellement cylindrique présentant une surface interne (22) étagée présentant au moins deux sections dont les diamètres correspondent à ceux de la pièce intérieure (10), également reliées par un épaulement (24) interne, une chambre d'expansion (34) délimitée par les deux épaulements (14, 24), au moins une ouverture (36) pour l'alimentation et/ou la sortie du fluide dans la chambre d'expansion (34), caractérisé en ce que
l'ouverture (36) d'alimentation et/ou de sortie est relié à la chambre d'expansion (34) par l'intermédiaire de la pièce extérieure (20) de la commande d'embrayage de façon à créer un accès direct à proximité de la chambre d'expansion (34).

2. Dispositif selon la revendication 1, caractérisé en ce que l'étanchéité de la chambre d'expansion (34) est obtenue par au moins deux joints élastiques (40, 42) disposés dans des gorges annulaires prévues dans la surface interne (22) de la pièce extérieure (20) et de part et d'autre de la chambre d'expansion (34).

3. Dispositif selon la revendication 1, caractérisé en ce que l'étanchéité de la chambre d'expansion (34) est obtenue par au moins deux joints élastiques (40, 42) dont au moins un (40) est disposé dans une gorge annulaire prévue dans la surface interne (22) de diamètre A de la pièce extérieure (20) , tandis qu'au moins un joint (42) est disposé dans une gorge annulaire prévue dans la surface externe (12) de diamètre B de la pièce intérieure (10) et à proximité de la chambre d'expansion (34).

4. Dispositif selon l'une quelconque des revendications 2 à 3, caractérisé en ce que
au moins un joint d'étanchéité (40) est disposé en dessous du chemin de roulement à billes (54).

5. Dispositif selon l'une quelconque des revendications 2 à 4, caractérisé en ce que
à côté d'au moins un joint (40, 42) disposé dans une gorge, est prévu une bague racleur de façon à empêcher l'introduction d'impuretés venant de l'extérieur du dispositif.

6. Dispositif selon l'une quelconque des revendications 1 à 5, caractérisé en ce que
la pièce intérieure (10) est fixée au carter (50) d'embrayage et la pièce extérieure (20) est disposée de façon mobile sur la pièce intérieure (10).

7. Dispositif selon la revendication 6, caractérisé en ce que la pièce intérieure (10) est fixée au carter (50) d'embrayage par des moyens de fixation tels que des boulons (32).

8. Dispositif selon la revendication 6, caractérisé en ce que la pièce intérieure (10) est fixée sur un tube porteur (68) du carter (50) d'embrayage par des moyens élastiques, tels que des "O-rings" (46), logés dans des gorges annulaires (48) prévues dans l'alésage central de la pièce intérieure (10).

9. Dispositif selon la revendication 8, caractérisé en ce que la pièce intérieure (10) est maintenue sur le tube porteur (68) du carter (50) par l'introduction d'un produit, tel que du silicone, dans les gorges annulaires (48) prévues dans l'alésage central de la pièce intérieure (10).

10. Dispositif selon l'une quelconque des revendications 6 à 9, caractérisé en ce que
la pièce extérieure (20) est munie à son extrémité avant d'une butée d'embrayage (50) comprenant une bague de poussée (52) montée sur un chemin de roulement à billes (54) intégré dans la pièce extérieure (20).

11. Dispositif selon l'une quelconque des revendications 6 à 10, caractérisé en ce que
sur l'extrémité avant de la pièce intérieure (10) sont prévus des moyens d'arrêt, tel qu'un anneau (38) afin de limiter le déplacement axial de la pièce extérieure (20) vers les lamelles du ressort à diaphragme (64).

12. Dispositif selon l'une quelconque des revendications 1 à 5, caractérisé en ce que
la pièce extérieure(20) est fixée au carter (50) d'embrayage et la pièce intérieure(10) est positionnée de façon mobile (déplacement axial) à l'intérieur de la pièce extérieure (20).
